# EUROPEAN PATENT APPLICATION

(11) **EP 4 693 611 A1**
(43) Date of publication of application: **11.02.2026**
(21) Application number: 25150220.9
(22) Date of filing: 03.01.2025
(51) Int. Cl.: H01M 10/613, H01M 10/625, H01M 10/6554, H01M 10/6556, H01M 10/6567

(54) **BATTERY LIQUID COOLING DEVICE AND BATTERY PACK**

(30) Priority: 09.08.2024 CN 202411095510
(71) Applicant: Eve Energy Co., Ltd., Huizhou, Guangdong 516006 (CN)
(72) Inventor: WANG, Feichuang, Huizhou,Guangdon, 516006 (CN); ZHANG, Qian, Huizhou,Guangdon, 516006 (CN); HUANG, Xiaobin, Huizhou,Guangdon, 516006 (CN); ZHOU, Hongquan, Huizhou,Guangdon, 516006 (CN)
(74) Representative: Herrero & Asociados, S.L.

(57) **Abstract**

A battery liquid cooling device, includes: a support frame (10); a first liquid cooling body (20), arranged on the support frame and defining a first channel (20a); and a second liquid cooling body (30). Two ends of the second liquid cooling body are respectively connected to the support frame and the first liquid cooling body; the second liquid cooling body defines a second channel (30a); the support frame, the first liquid cooling body, and the second liquid cooling body enclose to form a receiving cavity having an opening facing upwardly, the receiving cavity receives a cell. A cooling medium is circulated in the first channel of the first liquid cooling body and in the second channel of the second liquid cooling body to cool down the cell received in the receiving.

## Description

### TECHNICAL FIELD

Embodiments of the present disclosure relate to the technical field of battery manufacturing devices, and more specifically, to a battery liquid cooling device and a battery pack.

### BACKGROUND

Cell To Pack (CTP) is a module-less battery pack structure, and that is, cells are directly integrated into a battery pack, and a traditional battery module is omitted. This structure allows the battery pack to be directly integrated into a bottom plate of a vehicle, serving as a part of structural components of the vehicle.

In the art, CTP has become a mainstream configuration of the battery pack. For a square cell, an L-shaped tray edge beam is arranged as a support for the cell and is structurally combined with a shape of the square cell, such that a "simple support beam" is formed and is stable and reliable. The simple support beam ensures that the entire battery pack can reach high frequency vibration of 50Hz and have high strength.

However, some manufacturers design the square cell by arranging an electrode pole of the cell to face upwards, especially for a small-sized square cell, due to structural constraints, liquid cooling can be arranged at a bottom of the cell only. In this way, the cell is arranged above a liquid cooling plate. When the space of the battery pack is limited, a crossbeam and a longitudinal beam cannot be arranged at the same time, the liquid cooling plate can only be served as a "floor plate", however, strength of the liquid cooling plate itself is insufficient, and therefore, this configuration has limitation on mechanical performance of a battery case.

### SUMMARY

In a first aspect, the present disclosure provides a battery liquid cooling device, includes: a support frame; a first liquid cooling body, arranged on the support frame and defining a first channel; and at least one second liquid cooling body, wherein, for each of the at least one second liquid cooling body, two ends of the second liquid cooling body are respectively connected to the support frame and the first liquid cooling body; the second liquid cooling body defines a second channel; the support frame, the first liquid cooling body, and the second liquid cooling body enclose to form a receiving cavity having an opening facing upwardly; the receiving cavity receives a cell. A cooling medium is circulated in the first channel of the first liquid cooling body and in the second channel of the second liquid cooling body to cool down the cell received in the receiving. Strength of the first liquid cooling body is greater than strength of the second liquid cooling body, the first liquid cooling body and the second liquid cooling body are configured to support the cell received in the receiving cavity. When the cell is received in the receiving cavity, an overlapping area between a projection of the cell in a vertical direction overlaps and a projection of the second liquid cooling body in the vertical direction is larger than an overlapping area between the projection of the cell in the vertical direction and a projection of the first liquid cooling body in the vertical direction.

In a second aspect, the present disclosure provides a battery pack, including the battery liquid cooling device as described in the above.

In the present disclosure, the battery liquid cooling device is provided. the first liquid cooling body, which has a strength greater than a strength of the second liquid cooling body, is arranged. When the space of the battery pack is limited, the technical problem of the second liquid cooling body having insufficiently strength can be solved. The first liquid cooling body provides sufficient support for the cell received in the receiving cavity, ensuring overall mechanical performance of the battery liquid cooling device.

The first liquid cooling body defines the first channel, the second liquid cooling body defines the second channel. Each of the second channel and the first channel are arranged with a cooling medium to dissipate heat from the cell received in the receiving cavity. The second liquid cooling body dissipates a larger amount of heat. The first liquid cooling body, while providing structural strength, dissipates a small amount of heat from the cell. Cooling demands of the cell received in the receiving cavity can be met. While ensuring the cooling, safety of the battery liquid cooling device is improved, safety risks caused by the second liquid cooling body having insufficient strength can be reduced.

### BRIEF DESCRIPTION OF THE DRAWINGS

FIG. 1 is an assembled schematic view of a battery liquid cooling device according to an embodiment of the present disclosure.
FIG. 2 is a structural schematic view of the battery liquid cooling device according to an embodiment of the present disclosure.
FIG. 3 is a structural schematic view of the battery liquid cooling device shown in FIG. 2, being viewed from another viewing angle.
FIG. 4 is a cross-sectional view of the battery liquid cooling device shown in FIG. 3, taken along a line C-C.
FIG. 5 is an enlarged view of a portion D shown in FIG. 4.
FIG. 6 is an exploded view of the battery liquid cooling device shown in FIG. 2.
FIG. 7 is another exploded view of the battery liquid cooling device shown in FIG. 2.

### Reference numerals:

100, battery liquid cooling device; 10, support frame; 11, first stepped slot; 12, support crossbeam; 13, support longitudinal beam; 14, carrier beam; 13a, liquid supply port; 13b, discharging port; 20, first liquid cooling body; 20a, first channel; 20b, returning port; 20c, outlet port; 21, second stepped slot; 30, second liquid cooling body; 30a, second channel; 30b, liquid outlet; 30c, liquid inlet; 40, return pipeline;
200, cell.

### DETAILED DESCRIPTIONS

Cell To Pack (CTP) is a module-less battery pack structure, and that is, cells are directly integrated into a battery pack, and a traditional battery module is omitted. This structure allows the battery pack to be directly integrated into a bottom plate of a vehicle, serving as a part of structural components of the vehicle.

Some manufacturers provide a small-sized square cell and arrange an electrode pole of the cell to face upwards, structural constraints are quite obvious, liquid cooling can be arranged at a bottom of the cell only. In this way, the cell is arranged above a liquid cooling plate. Although heat dissipation is satisfied, some defects are caused.

When a space of the battery pack is limited, a crossbeam and a longitudinal beam cannot be arranged at the same time, the liquid cooling plate can only be served as a "floor plate", however, strength of the liquid cooling plate itself is insufficient, and therefore, this configuration has limitation on mechanical performance of the battery pack.

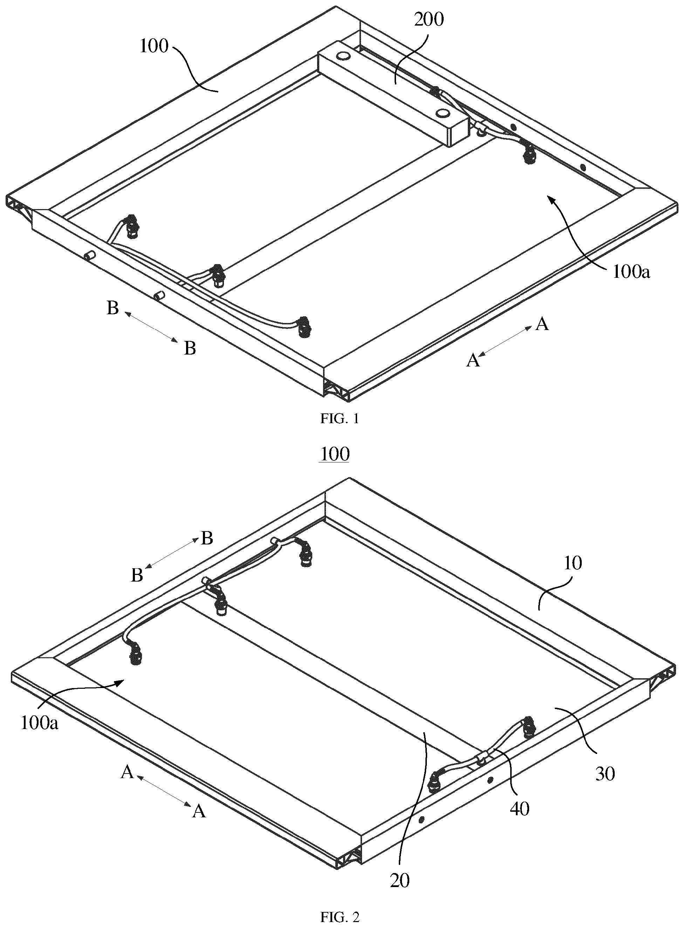

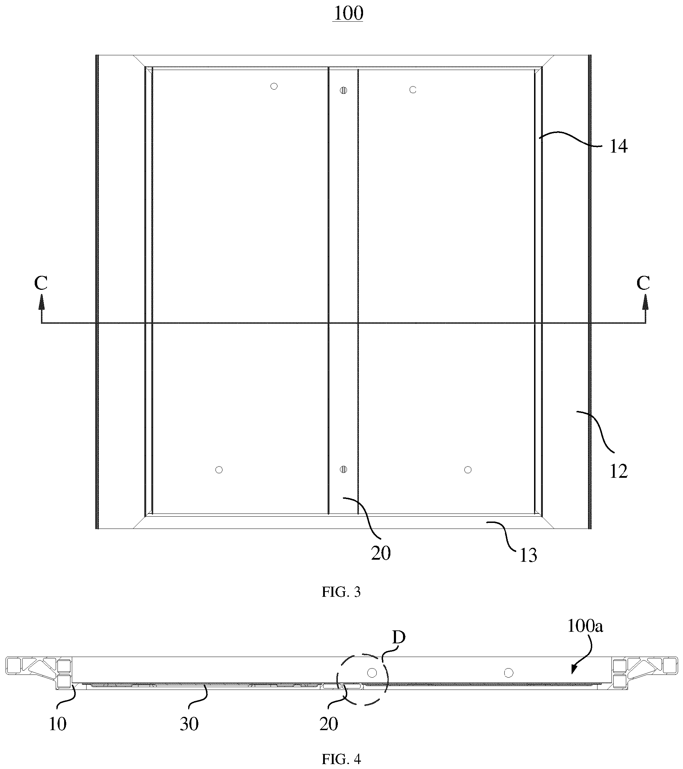

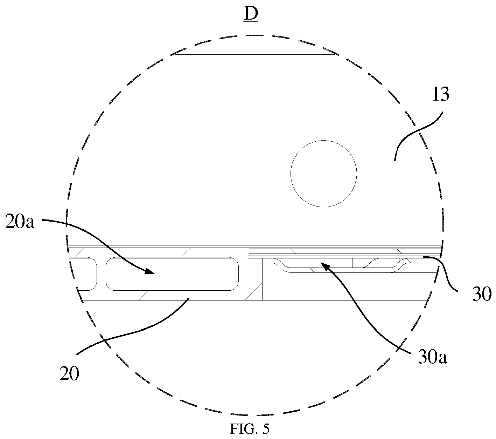

As shown in FIGS. 1 to 5, the present embodiment provides a battery liquid cooling device 100 including a support frame 10, a first liquid cooling body 20, and a second liquid cooling body 30. It is understood that the battery liquid cooling device 100 shall be able to be arranged inside a battery pack, or the battery pack includes the battery liquid cooling device 100.

In the present embodiment, the support frame 10 is made of an aluminum alloy, and the aluminum alloy support frame 10 is light in weight and has certain strength. The aluminum alloy support frame 10 can be easily processed and molded into a desired shape. The support frame 10 is a rectangular frame and can provide a stable mounting space, facilitating the square cell 200 to be arranged therein.

The first liquid cooling body 20 is arranged on the support frame 10, and the first liquid cooling body 20 is an extruded-molded member. Extrusion molding ensures that the first liquid cooling body 20 has a uniform wall thickness and stable mechanical performance. The wall thickness of the first liquid cooling body 20 is greater than a wall thickness of the second liquid cooling body 30. The first liquid cooling body 20 is connected to the support frame 10 by welding, which may specifically be stirring friction welding. In this way, strength and corrosion resistance of the connection between the first liquid cooling body 20 and the support frame 10 can be improved. Compared with the second liquid cooling body 30, the first liquid cooling body 20 has greater strength and is configured to support the cell 200 received in a receiving cavity, ensuring that the cell 200 is not easily deformed or damaged when being subjected to an external force, such that structural stability of the entire support frame 10 is improved. In this way, the cell 200 can be stably placed in the support frame 10, performance can be maintained even when the battery pack is used in a dynamic environment. The first liquid cooling body 20 has a cavity formed by extrusion and molding, and the cavity directly defines the first channel 20a in which a cooling medium flows. The first channel 20a can be used in combination with a second channel 30a of the second liquid cooling body 30, increasing a flow path of the cooling medium and providing a larger heat dissipation area.

Two ends of the second liquid cooling body 30 are respectively connected to the support frame 10 and the first liquid cooling body 20. The second liquid cooling body 30 may be made of an aluminum material having high thermal conductivity. The second liquid cooling body 30 defines the second channel 30a, and the second liquid cooling body 30 takes the second channel 30a to dissipate heat from the cell 200. The second channel 30a is extending along a length direction of the second liquid cooling body 30 and is bent to form a Z shape. The second channel 30a can be formed by stamping an interior of the second liquid cooling body 30. Stamping to form a one-piece structure having the second liquid cooling body 30 enables a channel in any complex shape to be formed easily. The Z-shaped bending second channel 30a increases the heat dissipation area of the cooling medium. The flow path of the cooling medium in the channel is increased, so as to increase a heat dissipation efficiency. In the present embodiment, in order to match the rectangular support frame 10, the second liquid cooling body 30 includes a second liquid cooling plate and a thermally-conductive structural adhesive disposed on the second liquid cooling plate. The second liquid cooling plate is of a flat plate. A side of the second liquid cooling plate having a large area is disposed facing toward the cell 200. In a case of not increasing an overall height of the battery liquid cooling device 100, the heat dissipation area is maximized, space occupation in a height direction is reduced. The thermally-conductive structural adhesive has ideal thermal conductivity and can conduct heat from the cell 200 to the second liquid cooling plate, improving the heat dissipation efficiency.

The support frame 10, the first liquid cooling body 20, and the second liquid cooling body 30 enclose to form a receiving cavity having an opening facing upwardly. The receiving cavity receives the cell 200, the first liquid cooling body 20 and the second liquid cooling body 30 are configured to support the cell 200 held in the receiving cavity. The cooling medium is circulated in the first channel 20a of the first liquid cooling body 20 and the second channel 30a of the second liquid cooling body 30 to cool down the cell 200 received in the receiving cavity.

When the cell 200 is received in the receiving cavity, an overlapping area between a projection of the cell 200 in a vertical direction overlaps and a projection of the second liquid cooling body 30 in the vertical direction is larger than an overlapping area between the projection of the cell 200 in the vertical direction and a projection of the first liquid cooling body 20 in the vertical direction. In this way, the second liquid cooling body 30 can dissipate heat more efficiently. While the first liquid cooling body 20 provides support, the first liquid cooling body 20 also assists in dissipating heat. Heat dissipation demands of the cell 200 are met, and at the same, the first liquid cooling body 20 is arranged to improve strength of supporting the cell 200. Safety of the battery liquid cooling device 100 is improved, and safety risks caused by the second liquid cooling body 30 having insufficient strength are reduced.

In practice, the space formed by the support frame 10, the first liquid cooling body 20, and the second liquid cooling body 30 allows the electrode pole of the cell 200 to be placed upwardly, i.e., vertically placed, or allows the electrode pole of the cell 200 to be placed in a right-left direction, i.e., the cell laying down, which is not limited by the present disclosure.

In some embodiments, the support frame 10 defines a first stepped slot 11, the first liquid cooling body 20 defines a second stepped slot 21. A slot bottom surface of the first stepped slot 11 is aligned with a slot bottom surface of the second stepped slot 21. An outer peripheral edge of the second liquid cooling body 30 is embedded in the first stepped slot 11 and the second stepped slot, such that the second liquid cooling plate is not tilted after being embedded. In addition, the second liquid cooling body 30 is prevented from being displaced due to vibration or impact, overall safety of the battery liquid cooling device 100 is improved. By defining the first stepped slot 11 and the second stepped slot 21, the second liquid cooling body 30 can be stably connected with the support frame 10 and the first liquid cooling body 20, improving structural stability.

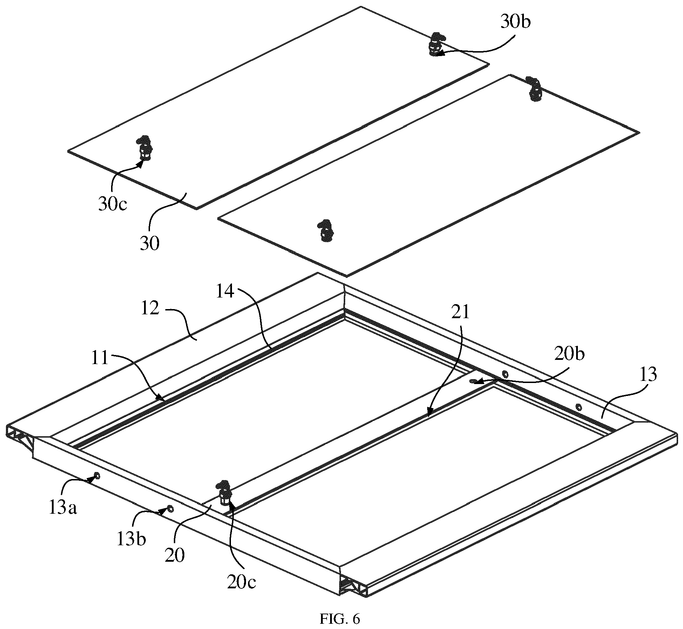

As shown in FIG. 6, in some embodiments, the second liquid cooling body 30 defines a liquid outlet 30b, communicating with the second channel 30a. The first liquid cooling body 20 defines a returning port 20b disposed adjacent to the liquid outlet 30b. The returning port 20b is communicated with the first channel 20a. The battery liquid cooling device 100 further includes a returning pipeline 40. Two ends of the returning pipeline 40 are respectively communicated with the liquid outlet 30b and the returning port 20b. A flowing direction of the cooling medium in the second channel 30a is different from a flowing direction of the cooling medium in the first channel 20a. By defining the liquid outlet 30b, the returning port 20b, and the returning pipeline 40, the cooling medium can effectively circulate between the second liquid cooling body 30 and the first liquid cooling body 20. The first channel 20a defined by the cavity of the first liquid cooling body 20 can serve as a returning channel, such that the heat dissipation efficiency of the entire battery pack is improved.

The support frame 10 further defines a liquid supply port 13a and a discharging port 13b. A side of the second liquid cooling body 30 opposite to the liquid outlet 30b defines a liquid inlet 30c, communicated with the liquid supply port 13a. A side of the first liquid cooling body 20 opposite to the returning port 20b defines an outlet port 20c, communicated with the discharging port 13b. The cooling medium flows through the liquid supply port 13a to enter the second liquid cooling body 30, and the cooling medium is discharged through the discharging port 13b to be out of the first liquid cooling body 20. The liquid supply port 13a and the discharging port 13b are located on a same side of the support frame 10. Layout of cooling pipelines is simplified, and mounting and maintenance can be performed easily.

Specifically, the liquid outlet 30b and the liquid inlet 30c are both defined in an upper end surface of the second liquid cooling body 30, and the returning port 20b and the outlet port 20c are both defined in an upper end surface of the first liquid cooling body 20. The liquid inlet 30c and the liquid supply port 13a are disposed adjacent to each other enabling the cooling medium to enter the second liquid cooling body 30 smoothly. The outlet port 20c and the discharging port 13b are disposed adjacent to each other, enabling the cooling medium to be discharged after completing circulation. Since an input path and an output path of the cooling medium are clear and direct, potential failure points are reduced, and reliability of the flowing path of the cooling medium is enhanced.

Understandably, in the present embodiment, the second channel 30a of the second liquid cooling body 30 is served as an inlet flow channel, and the first channel 20a of the first liquid cooling body 20 is served as a returning flow channel. Of course, the second channel 30a of the second liquid cooling body 30 may be served as the returning flow channel, and the first channel 20a of the first liquid cooling body 20 may be served as the inlet flow channel. The present disclosure does not limit functions of the channels.

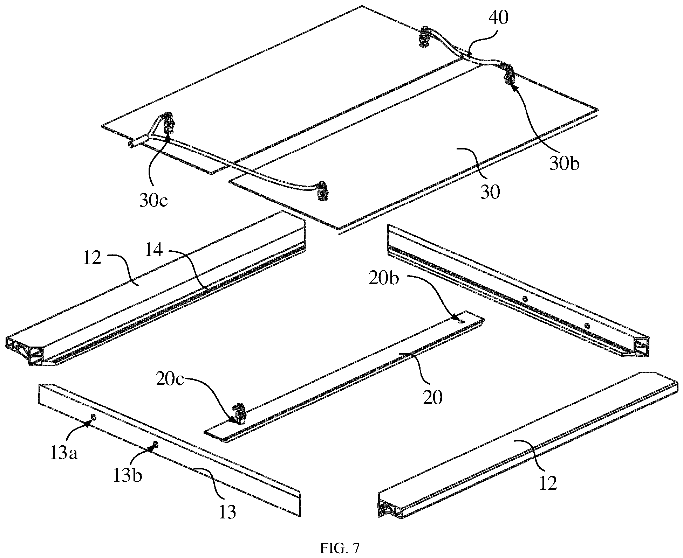

As shown in FIG. 7, in some embodiments, the support frame 10 includes two support crossbeams 12 and two support longitudinal beams 13, and a carrier beam 14. The two support longitudinal beams 13 are connected between the two support crossbeams 12 and are disposed at two opposite sides of the two support crossbeams 12, such that a stable support structure is formed. The carrier beam 14 is connected to the two support crossbeams 12. The carrier beam 14 and the first liquid cooling body 20 support two ends of the cell 200 received in the receiving cavity, such that structural stability of the support frame 10 is significantly enhanced, risks of damages to the cell 200 due to vibration or impact are reduced, overall safety of the support frame 10 is improved. When the cell 200 is arranged in the receiving cavity, the two ends of the cell 200 are respectively supported by the carrier beam 14 and the first liquid cooling body 20, the gravitation force of the cell 200 is more evenly dispersed, a localized pressure applied on the cell 200 is reduced, such that risks of damages to the cell 200 are reduced.

The carrier beam 14 and the support crossbeams 12 are configured as a one-piece and integral structure, improving integrality of the support frame 10, reducing stress concentration at joints and reducing formation of fatigue cracks, such that durability of the support frame 10 is improved, and structural integrity is improved.

Specifically, the carrier beam 14 is disposed at connection between the support crossbeams 12 and the support longitudinal beams 13. The carrier beam 14 serves as an additional support structure and operates cooperatively with the support crossbeams 12 and the support longitudinal beams 13, improving stability of the entire support frame 10, occupation of a space inside the support frame 10 is reduced. In this way, configuration of the battery pack is more compact, the weight of the cell 200 can be carried and dispersed more effectively, possible external impacts can be dispersed more effectively, and localized stress concentration is reduced.

In some embodiments, upper end surfaces of the carrier beam 14, the first liquid cooling body 20 and the second liquid cooling body 30 are located at a same horizontal height. That is, along the height direction, an end surface of the carrier beam 14 is aligned with an end surface of the first liquid cooling body 20 in contact with the cell 200, ensuring that the carrier beam 14 and the first liquid cooling body 20 support the two ends of the cell 200, ensuring that the two ends of the cell 200 are subjected to a uniform force. The cell 200 is prevented from deformation or damages to due to unequal supports. Rigidity of the entire battery liquid cooling device 100 is improved. A decrease in load-bearing performance caused by structural deformation is reduced. Alignment of surfaces further simplifies a mounting process of the cell 200, ensuring that the cell 200 is correctly placed at a predetermined position and is prevented from slipping in the receiving cavity.

As shown in FIG. 2, the carrier beam 14 and the first liquid cooling body 20 are both extending along a first direction AA. Two carrier beams 14 are provided. The two carrier beams 14 are arranged opposite to each other along a second direction BB. The two carrier beams 14 are parallel to each other and are spaced apart from each other. It is understood that, when the support frame 10 is rectangular, the carrier beams 14 and the first liquid cooling body 20 are both extending along a length direction of the support frame 10, and the two carrier beams 14 are disposed opposite each other along a width direction of the support frame 10. The carrier beams 14 are configured to provide a uniform support to reduce an effect, caused by vibration, on the cell 200 in the vertical direction. A plurality of second liquid cooling bodies 30 are arranged to ideally absorb the heat generated by the cell 200. Dissipating the heat through the second liquid cooling body 30 improves heat dissipation performance of the entire battery pack. One first liquid cooling body 20 is disposed between the adjacent two second liquid cooling bodies 30. That is, each of two sides of the second liquid cooling plate along the width direction of the support frame 10 abuts against one first liquid cooling plate. The first liquid cooling plate is disposed between one carrier beam 14 and one first liquid cooling body 20 adjacent to the carrier beam 14. The carrier beam 14 abuts against the first liquid cooling plate. Arrangement of the carrier beams 14, the second liquid cooling bodies 30, and the first liquid cooling body 20 fully utilizes the space of the support frame 10, enabling the first liquid cooling body 20 to provide additional support and heat dissipation for the cell 200, and ensuring structural compactness of the battery liquid cooling device 100. The first direction AA is perpendicular to the second direction BB.

Understandably, according to practical usage, a length a width of the support frame 10 can be increased, and the number of first liquid cooling bodies can be adjusted, so as to adapt the support frame 10 in various sizes and shapes, such that more cells 200 can be received.

In some embodiments, an intermediate rid is arranged in the first liquid cooling body 20. The intermediate rib separates the cavity into a first cavity and a second cavity. The intermediate rib increases the strength of the first liquid cooling body 20, improving stability of the first liquid cooling body 20 when being subjected to external loads. Moreover, the first cavity and the second channel 30a of the second liquid cooling body 30 disposed opposite thereto can be used cooperatively; and the second cavity and the second channel 30a of another second liquid cooling body 30 disposed opposite thereto can be used cooperatively.

Specifically, a plurality of liquid inlets 30c corresponding to the plurality of second liquid cooling bodies 30 are all communicated with the above-mentioned liquid supply port 13a. Correspondingly, when a plurality of first liquid cooling bodies 20 are arranged, a plurality of outlet ports 20c corresponding to the plurality of first liquid cooling bodies 20 are all communicated with the above-mentioned discharging port 13b. Since the plurality of liquid inlets 30c and the plurality of outlet ports 20c respectively share one liquid supply port 13a and one discharging port 13b, a single connection point needs to be operated for maintenance and replacement. Therefore, maintenance difficulty is reduced, pipeline layout of flowing paths of the cooling medium is simplified. It is ensured that the cooling medium flows in a certain order, and heat is dissipated effectively. The number of pipeline connection points is reduced. Therefore, pipeline blockage and leakage are reduced.

In some embodiments, a width of the first liquid cooling body 20 is greater than twice of a width of the carrier beam 14. One carrier beam 14 is configured to carry a plurality of cells 200 arranged in a row in the first direction AA, allowing the plurality of cells 200 to be closely arranged in a longitudinal direction, and the plurality of cells 200 are evenly supported by the carrier beam 14. The first liquid cooling body 20 is configured to carry a plurality of cells 200 arranged in two sets in the second direction BB. By increasing the width of the first liquid cooling body 20, a sufficient heat dissipation surface is provided at the same time for the two sets of cells 200 in the cross direction, and compactness of the battery liquid cooling device 100 is maintained.

In some embodiments, the first liquid cooling body 20 and the carrier beam 14 are disposed in parallel to each other and are spaced apart from each other. The second liquid cooling body 30 is disposed between the carrier beam 14 and the first liquid cooling body 20. Two second liquid cooling bodies 30 are arranged. The first liquid cooling body 20 is disposed at a middle position between the two carrier beams 14 along the second direction BB, providing a uniform cooling effect for the two sets of cells 200 supported by the first liquid cooling body 20. The heat dissipation effect is improved.

The second liquid cooling body 30 forms about 90*%* of a bottom area of the receiving cavity, ensuring heat dissipation from main areas of the cells 200. The first liquid cooling body 20 forms about 10*%* of the bottom area of the receiving cavity. In this way, the battery liquid cooling device 100 has a compact structure, the liquid cooling bodies do not occupy too much space. The above area allocation ensures a maximum heat dissipation efficiency within a limited space, and at the same time, structural compactness is ensured, and stability of the cells 200 is ensured.

## Claims

1. A battery liquid cooling device, comprising:
a support frame (10);
a first liquid cooling body (20), arranged on the support frame (10) and defining a first channel (20a); and
at least one second liquid cooling body (30), wherein, for each of the at least one second liquid cooling body (30), two ends of the second liquid cooling body (30) are respectively connected to the support frame (10) and the first liquid cooling body (20); the second liquid cooling body (30) defines a second channel (30a); the support frame (10), the first liquid cooling body (20), and the second liquid cooling body (30) enclose to form a receiving cavity having an opening facing upwardly; the receiving cavity receives a cell;
wherein a cooling medium is circulated in the first channel (20a) of the first liquid cooling body (20) and in the second channel (30a) of the second liquid cooling body (30) to cool down the cell received in the receiving;
strength of the first liquid cooling body (20) is greater than strength of the second liquid cooling body (30), the first liquid cooling body (20) and the second liquid cooling body (30) are configured to support the cell received in the receiving cavity;
when the cell is received in the receiving cavity, an overlapping area between a projection of the cell in a vertical direction overlaps and a projection of the second liquid cooling body (30) in the vertical direction is larger than an overlapping area between the projection of the cell in the vertical direction and a projection of the first liquid cooling body (20) in the vertical direction.

2. The battery liquid cooling device according to claim 1, wherein the support frame (10) defines a first stepped slot (11), the first liquid cooling body (20) defines a second stepped slot (12); a slot bottom surface of the first stepped slot (11) is aligned with a slot bottom surface of the second stepped slot (12); and
an outer peripheral edge of each of the at least one second liquid cooling body (30) is embedded in the first stepped slot (11) and the second stepped slot (12).

3. The battery liquid cooling device according to claim 2, wherein the support frame (10) comprises:
two support crossbeams (12) and two support longitudinal beams (13), wherein the two support longitudinal beams (13) are connected between the two support crossbeams (12) and are respectively disposed at two opposite sides of the two support crossbeams (12);
at least one carrier beam (14), connected to the two support crossbeams (12), wherein the at least one carrier beam (14) and the first liquid cooling body (20) are configured to support the cell received in the receiving cavity.

4. The battery liquid cooling device according to claim 3, wherein upper end surfaces of the at least one carrier beam (14), the first liquid cooling body (20) and the at least one second liquid cooling body (30) are located at a same horizontal height.

5. The battery liquid cooling device according to claim 3 or 4, wherein the at least one carrier beam (14) and the first liquid cooling body (20) are both extending along a first direction, the number of the at least one carrier beam (14) is two, the two carrier beams are arranged opposite to each other along a second direction; the at least one second liquid cooling body (30) comprises a plurality of second liquid cooling bodies; one first liquid cooling body (20) is disposed between adjacent two of the plurality of second liquid cooling bodies; the first direction is perpendicular to the second direction.

6. The battery liquid cooling device according to claim 5, wherein a width of the first liquid cooling body (20) is greater than twice of a width of each of the at least one carrier beam (14); one of the at least one carrier beam (14) is configured to carry a plurality of cells arranged in a row in the first direction; the first liquid cooling body (20) is configured to carry a plurality of cells arranged in two sets in the second direction.

7. The battery liquid cooling device according to claim 6, wherein the first liquid cooling body (20) and the at least one carrier beam (14) are disposed in parallel to each other and are spaced apart from each other; the at least one second liquid cooling body (30) is disposed between the at least one carrier beam (14) and the first liquid cooling body (20); and the at least one second liquid cooling body (30) comprises two second liquid cooling bodies; the first liquid cooling body (20) is disposed at a middle position between the two carrier beams (14) along the second direction;
the first liquid cooling body (20) forms substantially 10*%* of a bottom area of the receiving cavity, and the at least one second liquid cooling body (30) forms substantially 90*%* of the bottom area of the receiving cavity.

8. The battery liquid cooling device according to claim 1, wherein the first liquid cooling body (20) is an extruded-molded member; and/or
the first liquid cooling body (20) is connected to the support frame (10) by welding; and/or
the second channel (30a) is formed by stamping an interior of the second liquid cooling body (30).

9. The battery liquid cooling device according to claim 1, wherein the second liquid cooling body (30) defines a liquid outlet (30b) communicating with the second channel (30a); the first liquid cooling body (20) defines a returning port (20b) disposed adjacent to the liquid outlet (30b), the returning port (20b) is communicated with the first channel (20a);
the battery liquid cooling device further comprises a returning pipeline (40), two ends of the returning pipeline (40) are respectively communicated with the liquid outlet (30b) and the returning port (20b); a flowing direction of the cooling medium in the second channel (30a) is different from a flowing direction of the cooling medium in the first channel (20a).

10. A battery pack, comprising the battery liquid cooling device according to any one of claims 1 to 9.
